(19) Europäisches Patentamt
European Patent Office
Office européen des brevets

(11) **EP 4 693 685 A1**

(12) **EUROPEAN PATENT APPLICATION**
published in accordance with Art. 153(4) EPC

(43) Date of publication:
**11.02.2026 Bulletin 2026/07**

(21) Application number: **23931372.9**

(22) Date of filing: **06.04.2023**

(51) International Patent Classification (IPC):
***H01M 50/409*** (2021.01)

(52) Cooperative Patent Classification (CPC):
**H01M 50/409**

(86) International application number:
**PCT/CN2023/086554**

(87) International publication number:
**WO 2024/207301 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited
Ningde, Fujian 352100 (CN)**

(72) Inventors:
• **LIN, Xiaoping
Ningde, Fujian 352100 (CN)**
• **XIE, Yuansen
Ningde, Fujian 352100 (CN)**

(74) Representative: **Kraus & Lederer PartGmbB
Thomas-Wimmer-Ring 15
80539 München (DE)**

(54) **SEPARATOR, ELECTROCHEMICAL APPARATUS, AND ELECTRONIC APPARATUS**

(57)     This application provides a separator, an electrochemical apparatus, and an electronic apparatus. The separator includes a sub-nanoporous material and a binder, where the sub-nanoporous material includes a metal-organic framework material or a molecular sieve material, and a pore size of pores of the sub-nanoporous material ranges from 0.01 nm to 1 nm. The separator provided in this application can confine an electrolyte within the pores of the sub-nanoporous material. Applying the separator provided in this application to an electrochemical apparatus facilitates reduction of side reactions between lithium metal and the electrolyte during cycling of the electrochemical apparatus, and increases lithium deposition density on a surface of a negative electrode plate, thereby alleviating issues such as cracking and peeling of an SEI film during cycling, improving safety performance of the electrochemical apparatus, and extending the cycle life of the electrochemical apparatus; and further facilitates an increase in lithium-ion transference number, thereby delaying growth of lithium dendrites, improving safety performance of the electrochemical apparatus, and extending the cycle life of the electrochemical apparatus.

FIG. 1

**Description**

**TECHNICAL FIELD**

This application relates to the field of electrochemical technologies, and specifically to a separator, an electrochemical apparatus, and an electronic apparatus.

**BACKGROUND**

Electrochemical apparatuses such as lithium metal batteries possess advantages of high energy density, high operating voltage, low self-discharge rate, small volume, and light weight, and thus have wide applications in the field of consumer electronics. Lithium metal has a high theoretical specific capacity and holds broad application prospects in lithium metal batteries. Therefore, using lithium metal as a negative electrode while employing a positive electrode including a high-energy-density positive electrode material can significantly increase the energy density and operating voltage of lithium metal batteries.

However, due to the extremely high reactivity of lithium metal, lithium metal continuously undergoes severe side reactions with an electrolyte during cycling of a lithium metal battery, resulting in consumption of both the electrolyte and lithium metal. Moreover, "lithium dendrites" formed during cycling of a lithium metal battery also lead to loss of lithium metal. Continuous loss of lithium metal causes a decrease in the capacity of a lithium metal battery, thereby resulting in a short cycle life of the lithium metal battery.

**SUMMARY**

The purpose of this application is to provide a separator, an electrochemical apparatus, and an electronic apparatus so as to extend the cycle life of the electrochemical apparatus. Specific technical solutions are as follows.

A first aspect of this application provides a separator including a sub-nanoporous material and a binder, where the sub-nanoporous material includes a metal-organic framework material or a molecular sieve material; and a pore size of pores of the sub-nanoporous material ranges from 0.01 nm to 1 nm. Employing the separator provided in this application and controlling the pore size of pores of the sub-nanoporous material within the foregoing range enables a high degree of matching between the size of the sub-nanopores and a size of solvent molecules in an electrolyte, such that the pore size of pores of the sub-nanoporous material is greater than or equal to the size of the solvent molecules, which facilitates confinement of the electrolyte within the pores of the sub-nanoporous material. Applying the separator provided in this application to an electrochemical apparatus can reduce side reactions between lithium metal and the electrolyte during cycling of the electrochemical apparatus, and delay growth of lithium dendrites, thereby improving safety performance of the electrochemical apparatus and extending the cycle life of the electrochemical apparatus.

In some embodiments of this application, a pore size of pores of the separator ranges from 20 nm to 500 nm. Controlling the pore size of pores of the separator within the foregoing range can improve safety performance of the electrochemical apparatus and extend the cycle life of the electrochemical apparatus.

In some embodiments of this application, the metal-organic framework material includes at least one of MOF-69C, MOF-74, MOF-5, ZIF-67, ZIF-8, MIL-100(Cr), MIL-100(Fe), UIO-66, PCN-61, or CuBTC; and the molecular sieve material includes at least one of MCM-41, SAPO-34, 3A molecular sieve, 4A molecular sieve, 5A molecular sieve, or 13X molecular sieve. Selecting the metal-organic framework material or molecular sieve material within the foregoing range enables the separator to have good mechanical properties and electrolyte absorption performance, which facilitates confinement of the electrolyte within the pores of the sub-nanoporous material. Applying the foregoing separator to an electrochemical apparatus can further improve safety performance of the electrochemical apparatus and extend the cycle life of the electrochemical apparatus.

In some embodiments of this application, the separator meets at least one of the following characteristics: (1) pores of the sub-nanoporous material contain a polymer, where the polymer includes at least one of sodium polystyrene sulfonate, poly N-2-(dimethylaminopropyl) methacrylamide, or polyacrylic acid; (2) a particle size D50 of the sub-nanoporous material ranges from 50 nm to 5000 nm; (3) a specific surface area of the sub-nanoporous material ranges from 200 $m^2/g$ to 2000 $m^2/g$; or (4) the binder includes at least one of polyvinylidene fluoride, polytetrafluoroethylene, polyacrylate, polyimide, polyamide, polyamide-imide, polyvinyl alcohol, polyacrylonitrile, polystyrene-butadiene copolymer, sodium alginate, sodium carboxymethyl cellulose, potassium carboxymethyl cellulose, sodium hydroxymethyl cellulose, or potassium hydroxymethyl cellulose. Applying the separator with the foregoing characteristics to an electrochemical apparatus facilitates further improvement of safety performance of the electrochemical apparatus and extension of the cycle life of the electrochemical apparatus.

In some embodiments of this application, the separator meets at least one of the following characteristics: (1) a thickness of the separator ranges from 5 $\mu m$ to 200 $\mu m$; or (2) a porosity of the separator ranges from 10% to 80%.

Adjusting the thickness and porosity of the separator within the foregoing ranges can reduce difficulty of the preparation process of the separator while improving uniformity of the separator. Applying the foregoing separator to an electrochemical apparatus facilitates blocking penetration of lithium dendrites, and can better exert a confinement effect of the separator on the electrolyte, which enables the electrochemical apparatus to have good safety performance and cycling performance while maintaining high energy density.

In some embodiments of this application, the separator meets at least one of the following characteristics: (1) a particle size of the sub-nanoporous material ranges from 100 nm to 5000 nm; (2) a thickness of the separator ranges from 10 $\mu$m to 50 $\mu$m; (3) a porosity of the separator ranges from 10% to 30%; (4) a pore size of pores of the separator ranges from 20 nm to 100 nm; or (5) a specific surface area of the sub-nanoporous material ranges from 200 $m^2$/g to 1500 $m^2$/g. Applying the separator with the foregoing characteristics to an electrochemical apparatus facilitates further improvement of safety performance of the electrochemical apparatus and extension of the cycle life of the electrochemical apparatus.

A second aspect of this application provides an electrochemical apparatus including the separator according to the first aspect of this application. The separator provided in this application can confine the electrolyte within the pores of the sub-nanoporous material, which facilitates improvement of safety performance of the electrochemical apparatus and extension of the cycle life of the electrochemical apparatus, thereby enabling the electrochemical apparatus provided in this application to have good safety performance and a long cycle life.

In some embodiments of this application, the electrochemical apparatus is cycled for a number greater than or equal to 10 cycles, where the cycling includes: the electrochemical apparatus is charged at a constant current of 0.2C to 3.7 V in an environment of 25+1°C, then charged at a constant voltage of 3.7 V to 0.025C, left standing for 5 minutes, and discharged at a constant current of 0.2C to 2.8 V; where a Raman spectrum of the separator exhibits a Raman peak between 730 $cm^{-1}$ and 750 $cm^{-1}$, a peak area of the Raman peak before cycling is $S_1$, a peak area of the Raman peak after cycling is $S_2$, and $1.1 \leq S_2/S_1 \leq 5$. An electrochemical apparatus having the foregoing characteristic peak with $S_2/S_1$ within the foregoing range exhibits good safety performance and a longer cycle life.

In some embodiments of this application, an infrared spectrum of the separator exhibits infrared characteristic peaks between 600 $cm^{-1}$ and 800 $cm^{-1}$, 1000 $cm^{-1}$ and 1260 $cm^{-1}$, and 1300 $cm^{-1}$ and 1500 $cm^{-1}$, where a sum of peak areas of the infrared characteristic peaks before cycling is $S_3$, a sum of peak areas of the infrared characteristic peaks after cycling is $S_4$, and $1.1 \leq S_4/S_3 \leq 100$, preferably $1.1 \leq S_4/S_3 \leq 30$. An electrochemical apparatus having the foregoing characteristic peaks with $S_4/S_3$ within the foregoing range exhibits good safety performance and a longer cycle life.

A third aspect of this application provides an electronic apparatus including the electrochemical apparatus according to the second aspect of this application. The electrochemical apparatus provided in this application has good safety performance and a long cycle life, thereby enabling the electronic apparatus of this application to have a long service life.

Beneficial effects of this application:

This application provides a separator, an electrochemical apparatus, and an electronic apparatus. The separator includes a sub-nanoporous material and a binder, where the sub-nanoporous material includes a metal-organic framework material or a molecular sieve material; and a pore size of pores of the sub-nanoporous material ranges from 0.01 nm to 1 nm. Employing the separator provided in this application and controlling the pore size of pores of the separator within the foregoing range facilitates confinement of an electrolyte within the pores of the sub-nanoporous material. Applying the separator provided in this application to an electrochemical apparatus facilitates reduction of side reactions between lithium metal and the electrolyte during cycling of the electrochemical apparatus, and increases lithium deposition density on a surface of a negative electrode plate, thereby alleviating issues such as cracking and peeling of an SEI film during cycling, improving safety performance of the electrochemical apparatus, and extending the cycle life of the electrochemical apparatus. Moreover, the separator fixes anions in the electrolyte within the pores of the sub-nanoporous material, which facilitates an increase in lithium-ion transference number, thereby delaying growth of lithium dendrites, improving safety performance of the electrochemical apparatus, and extending the cycle life of the electrochemical apparatus. Furthermore, confining the electrolyte within the pores of the sub-nanoporous material can also reduce the amount of electrolyte used, improve coulombic efficiency of the electrochemical apparatus, and enhance cycling performance of the electrochemical apparatus.

**DESCRIPTION OF DRAWINGS**

The accompanying drawings described herein are intended for better understanding of this application, and constitute a part of this application. Exemplary embodiments and descriptions thereof in this application are intended to interpret this application and do not constitute any improper limitation on this application.

FIG. 1 is a schematic diagram of a separator according to this application;

FIG. 2 is a schematic diagram of an internal structure of a sub-nanoporous material;
FIG. 3a is a scanning electron microscope (SEM) photograph of a separator prepared in Example 19;
FIG. 3b is an SEM photograph of the separator prepared in Example 19;
FIG. 3c is an SEM photograph of the separator prepared in Example 19;
FIG. 4 shows a Raman spectrum of a separator of a lithium metal battery of Example 1 before and after 10 cycles;
FIG. 5 shows an infrared spectrum of the separator of the lithium metal battery of Example 1 before and after 10 cycles; and
FIG. 6 is a cycling performance graph of lithium metal batteries prepared in Example 7 and Comparative Example 2.

**DESCRIPTION OF EMBODIMENTS**

To make the objectives, technical solutions, and advantages of this application more comprehensible, the following describes this application in detail with reference to the accompanying drawings and embodiments. Apparently, the described embodiments are only some but not all of these embodiments of this application. All other embodiments obtained by persons of ordinary skill in the art based on the embodiments of this application shall fall within the protection scope of this application.

It should be noted that, in specific embodiments of this application, an example in which a lithium metal battery is used as an electrochemical apparatus is used to illustrate this application. However, the electrochemical apparatus in this application is not limited to the lithium metal battery.

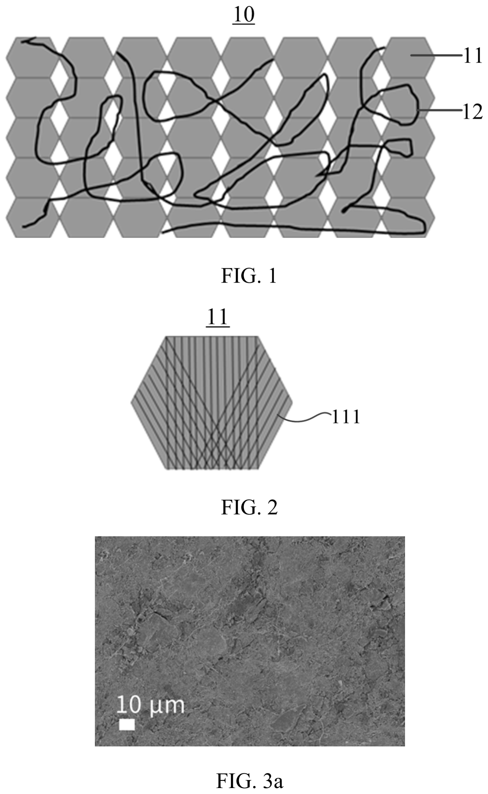

A first aspect of this application provides a separator. As shown in FIG. 1, the separator 10 includes a sub-nanoporous material 11 and a binder 12. In FIG. 1, Hexagons represent the sub-nanoporous material 11, and black curled lines represent the binder 12. The sub-nanoporous material 11 includes a metal-organic framework material or a molecular sieve material. As shown in FIG. 2, the sub-nanoporous material 11 has ordered sub-nanopores 111 internally. A pore size of pores of the sub-nanoporous material ranges from 0.01 nm to 1 nm, for example, the pore size of pores of the sub-nanoporous material may be 0.01 nm, 0.05 nm, 0.1 nm, 0.3 nm, 0.5 nm, 0.7 nm, 0.9 nm, 1 nm, or in a range defined by any two of these values.

Employing the separator provided in this application and controlling the pore size of pores of the sub-nanoporous material within the foregoing range enables a high degree of matching between the size of the sub-nanopores and a size of solvent molecules in an electrolyte, such that the pore size of pores of the sub-nanoporous material is greater than or equal to the size of the solvent molecules, which can confine the electrolyte within the pores of the sub-nanoporous material. Applying the separator provided in this application to an electrochemical apparatus facilitates reduction of side reactions between lithium metal and the electrolyte during cycling of the electrochemical apparatus, and increases lithium deposition density on a surface of a negative electrode plate, thereby alleviating issues such as cracking and peeling of an SEI film during cycling, improving safety performance of the electrochemical apparatus, and extending the cycle life of the electrochemical apparatus. Moreover, the separator fixes anions in the electrolyte within the pores of the sub-nanoporous material, which facilitates an increase in lithium-ion transference number, thereby delaying growth of lithium dendrites, improving safety performance of the electrochemical apparatus, and extending the cycle life of the electrochemical apparatus. Furthermore, confining the electrolyte within the pores of the sub-nanoporous material can also reduce the amount of electrolyte used, improve coulombic efficiency of the electrochemical apparatus, and enhance cycling performance of the electrochemical apparatus. The foregoing anions include anions ionized from a lithium salt, for example, including but not limited to bis(trifluoromethanesulfonyl)imide anions ($TFSI^-$).

In some embodiments of this application, a pore size of pores of the separator ranges from 20 nm to 500 nm, preferably from 20 nm to 100 nm. For example, the pore size of pores of the separator may be 20 nm, 30 nm, 50 nm, 80 nm, 90 nm, 100 nm, 200 nm, 300 nm, 400 nm, 500 nm, or in a range defined by any two of these values. Controlling the pore size of pores of the separator within the foregoing range enables the separator to have good mechanical properties and electrolyte absorption performance. Applying the separator to an electrochemical apparatus can reduce side reactions between lithium metal and the electrolyte during cycling of the electrochemical apparatus, facilitate an increase in lithium deposition density on a surface of a negative electrode plate and lithium-ion transference number, and delay growth of lithium dendrites, thereby further improving safety performance of the electrochemical apparatus and extending the cycle life of the electrochemical apparatus. In this application, the pore size of pores of the separator is an average pore size of the entire separator.

In some embodiments of this application, the metal-organic framework mat erial includes at least one of MOF-69C, MOF-74, MOF-5, ZIF-67, ZIF-8, MIL-100(C r), MIL-100(Fe), UIO-66, PCN-61, or CuBTC; and the molecular sieve material inclu des at least one of MCM-41, SAPO-34, 3A molecular sieve ($2/3K_2O \cdot 1/3Na_2O \cdot Al_2O_3 \cdot 2 SiO_2 \cdot 9/2H_2O$), 4A molecular sieve ($Na_2O \cdot Al_2O_3 \cdot 2SiO_2 \cdot 9/2H_2O$), 5A molecular sieve ($3/4CaO \cdot 1/4Na_2O \cdot Al_2O_3 \cdot 2SiO_2 \cdot 9/2H_2O$), or 13X molecular sieve ($Na_2O \cdot Al_2O_3 \cdot 2.45S iO_2 \cdot 6H_2O$). Selecting the metal-organic framework material or molecular sieve materi al within the foregoing range enables the separator to have good mechanical properties and electrolyte absorption performance, which further facilitates confinement of the e lectrolyte within the pores of the sub-nanoporous material, reduces side reactions betw een lithium metal and the electrolyte during cycling of the electrochemical apparatus, f acilitates an increase in lithium deposition density on a surface of a negative electrode plate and lithium-ion transference number, and delays growth of lithium dendrites, the reby further improving safety performance of the electrochemical apparatus and exten ding the cycle life of the electrochemical apparatus.

In some embodiments of this application, pores of the sub-nanoporous material contain a polymer, where the polymer includes at least one of sodium polystyrene sulfonate (PSS), poly N-2-(dimethylaminopropyl) methacrylamide (PDMAPMA), or polyacrylic acid (PAA). Modifying the interior of the pores of the sub-nanoporous material with the polymer within the foregoing range can further enhance adsorption capacity of the sub-nanopores for anions, increase lithium-ion migration rate, and thus delay growth of lithium dendrites, further improving safety performance of the electrochemical apparatus and extending the cycle life of the electrochemical apparatus.

In some embodiments of this application, a particle size D50 of the sub-nanoporous material ranges from 50 nm to 5000 nm, preferably from 100 nm to 1000 nm. For example, the particle size D50 of the sub-nanoporous material may be 50 nm, 100 nm, 300 nm, 500 nm, 1000 nm, 2500 nm, 4000 nm, 5000 nm, or in a range defined by any two of these values. Controlling the particle size D50 of the sub-nanoporous material within the foregoing range facilitates obtaining a separator with uniform thickness, density, and flatness, thereby better exerting a confinement effect of the separator on the electrolyte, further improving safety performance of the electrochemical apparatus and extending the cycle life of the electrochemical apparatus. In this application, "D50" refers to a particle size at the 50th percentile of the cumulative volume distribution from the small particle size side. In this application, selection of the particle size D50 of the sub-nanoporous material is limited by the thickness of the separator, where the particle size D50 of the sub-nanoporous material is less than or equal to half of the thickness of the separator.

In some embodiments of this application, a specific surface area of the sub-nanoporous material ranges from 200 $m^2/g$ to 2000 $m^2/g$, preferably from 200 $m^2/g$ to 1500 $m^2/g$. For example, the specific surface area of the sub-nanoporous material may be 200 $m^2/g$, 400 $m^2/g$, 800 $m^2/g$, 1200 $m^2/g$, 1500 $m^2/g$, 1800 $m^2/g$, 2000 $m^2/g$, or in a range defined by any two of these values. Controlling the specific surface area of the sub-nanoporous material within the foregoing range facilitates obtaining a separator with uniform thickness, density, and flatness, thereby better exerting a confinement effect of the separator on the electrolyte, further improving safety performance of the electrochemical apparatus and extending the cycle life of the electrochemical apparatus.

In some embodiments of this application, the binder includes at least one of polyvinylidene fluoride (PVDF), polytetrafluoroethylene (PTFE), polyacrylate, polyimide, polyamide, polyamide-imide, polyvinyl alcohol, polyacrylonitrile, polystyrene-butadiene copolymer, sodium alginate, sodium carboxymethyl cellulose, potassium carboxymethyl cellulose, sodium hydroxymethyl cellulose, or potassium hydroxymethyl cellulose. Selecting the binder within the foregoing range enables the separator to have good ion transport uniformity, mechanical properties, and stability. Applying the foregoing separator to an electrochemical apparatus can reduce side reactions between lithium metal and the electrolyte during cycling of the electrochemical apparatus, which facilitates an increase in lithium deposition density on a surface of a negative electrode plate and lithium-ion transference number, and delays growth of lithium dendrites, thereby further improving safety performance of the electrochemical apparatus and extending the cycle life of the electrochemical apparatus. This application imposes no particular limitation on a weight-average molecular weight of the binder, which can be selected according to conventional settings provided that the purpose of this application can be achieved. For example, the weight-average molecular weight of the binder may range from 150,000 to 1,000,000.

In this application, characteristics in the foregoing embodiments, such as the presence of a polymer in the pores of the sub-nanoporous material and types of the polymer, particle size of the sub-nanoporous material, specific surface area of the sub-nanoporous material, or types of the binder, can be arbitrarily combined, and the separator meets at least one of the foregoing characteristics.

In some embodiments of this application, a thickness of the separator range s from 5 $\mu m$ to 200 $\mu m$, preferably from 10 $\mu m$ to 50 $\mu m$. For example, the thickness o f the separator may be 5 $\mu m$, 10 $\mu m$, 20 $\mu m$, 30 $\mu m$, 50 $\mu m$, 80 $\mu m$, 100 $\mu m$, 120 $\mu m$, 1 50 $\mu m$, 180 $\mu m$, 200 $\mu m$, or in a range defined by any two of these values. Adjusting th e thickness of the separator within the foregoing range can reduce difficulty of the pre paration process of the separator while improving uniformity of the separator. Applyin g the foregoing separator to an electrochemical apparatus can block penetration of lithi um dendrites, which enables the electrochemical apparatus to have good safety perfor mance while maintaining high energy density.

In some embodiments of this application, a porosity of the separator ranges from 10% to 80%, preferably from 10% to 30%. For example, the porosity of the separator may be 10%, 15%, 20%, 25%, 30%, 40%, 50%, 70%, 80%, or in a range defined by any two of these values. Adjusting the porosity of the separator within the foregoing range facilitates better exertion of a confinement effect of the separator on the electrolyte, which can further improve safety performance of the electrochemical apparatus and extend the cycle life of the electrochemical apparatus.

In this application, the separator may also meet the characteristics of the thickness of the separator and the porosity of the separator described above.

In this application, a conductivity of the separator is less than or equal to $10^{-10}$ S/cm, which indicates that the separator of this application has good insulation properties, thereby facilitating improvement of short-circuit prevention and safety performance of the electrochemical apparatus.

The sub-nanoporous material of this application is a commercially available conventional substance, and sub-nanoporous materials with different pore sizes, particle sizes, or specific surface areas can be obtained by purchasing different models of sub-nanoporous materials. This application imposes no particular limitation on the source of the sub-nanoporous material, provided that the purpose of this application can be achieved.

This application imposes no particular limitation on a preparation method of the separator, provided that the purpose of this application can be achieved. For example, the separator can be prepared using commonly used film-forming methods in the art, including wet film-forming or dry film-forming methods, for example, but not limited to, cold pressing, hot pressing, blade coating, spin coating, or electrospinning. The preparation method of the separator may include, but is not limited to, the following steps: mixing a sub-nanoporous material and a binder, adding a solvent into the mixture, stirring the solution evenly until a uniform slurry is prepared; applying the slurry by blade coating to form a film, maintaining the coated film at 160°C to 200°C for 60 hours to 80 hours for activation, subjecting the activated film to high-pressure rolling, soaking the film in an electrolyte to impregnate the separator with the electrolyte, wiping off surface liquid with dust-free paper, and drying to obtain the separator; or mixing a sub-nanoporous material and a binder until a uniform mixture is prepared, forming a film by high-pressure rolling, activating the rolled film, soaking the film in an electrolyte to impregnate the separator with the electrolyte, wiping off surface liquid with dust-free paper, and drying to obtain the separator. A mass ratio of the sub-nanoporous material to the binder may range from 7:1 to 11:1, the solvent may include but is not limited to N-methylpyrrolidone, and a solid content of the slurry may range from 50wt% to 80wt%. A soaking time of the separator in the electrolyte may range from 40 hours to 60 hours, and soaking may be performed at room temperature or by heating the electrolyte, for example, at 40°C to 70°C.

Typically, adjusting a mass of a pressure roller used in high-pressure rolling can adjust a pore size of pores of the separator; increasing the mass of the pressure roller used in high-pressure rolling can reduce the pore size of pores of the separator, while decreasing the mass of the pressure roller used in high-pressure rolling can increase the pore size of pores of the separator. Adjusting the mass of the pressure roller used in high-pressure rolling can also adjust a porosity of the separator; increasing the mass of the pressure roller can reduce the porosity of the separator, while decreasing the mass of the pressure roller can increase the porosity of the separator. Adjusting a specification of a blade can adjust a thickness of the separator; selecting a blade with a larger specification can increase the thickness of the separator, while selecting a blade with a smaller specification can reduce the thickness of the separator. Specifically, for example, replacing a 30 $\mu$m blade with a 150 $\mu$m blade increases the thickness of the separator, while replacing a 30 $\mu$m blade with a 20 $\mu$m blade reduces the thickness of the separator.

A second aspect of this application provides an electrochemical apparatus including the separator according to the first aspect of this application. The separator provided in this application can confine an electrolyte within pores of a sub-nanoporous material. Applying the foregoing separator to an electrochemical apparatus facilitates improvement of safety performance of the electrochemical apparatus and extension of the cycle life of the electrochemical apparatus, thereby enabling the electrochemical apparatus provided in this application to have good safety performance and a long cycle life.

In some embodiments of this application, the electrochemical apparatus is cycled for a number greater than or equal to 10 cycles, where a Raman spectrum of the separator exhibits a Raman peak between 730 cm$^{-1}$ and 750 cm$^{-1}$, a peak area of the Raman peak before cycling is $S_1$, a peak area of the Raman peak after cycling is $S_2$, and $1.1 \leq S_2/S_1 \leq 5$. An electrochemical apparatus having the foregoing characteristic peak with $S_2/S_1$ within the foregoing range exhibits better safety performance and a longer cycle life. An increase in the peak area of the Raman peak after cycling indicates that more lithium ions and anions enter a pore structure of the sub-nanoporous material, thereby improving safety performance of the electrochemical apparatus and extending the cycle life of the electrochemical apparatus. The foregoing cycling includes the following steps: the electrochemical apparatus is charged at a constant current of 0.2C to 3.7 V in an environment of 25+1°C, then charged at a constant voltage of 3.7 V to 0.025C, left standing for 5 minutes, and discharged at a constant current of 0.2C to 2.8 V.

In some embodiments of this application, the electrochemical apparatus is cycled for a number greater than or equal to 10 cycles, where an infrared spectrum of the separator exhibits infrared characteristic peaks between 600 cm$^{-1}$ and 800 cm$^{-1}$, 1000 cm$^{-1}$ and 1260 cm$^{-1}$, and 1300 cm$^{-1}$ and 1500 cm$^{-1}$, a sum of peak areas of the infrared characteristic peaks before cycling is $S_3$, a sum of peak areas of the infrared characteristic peaks after cycling is $S_4$, and $1.1 \leq S_4/S_3 \leq 100$, preferably $1.1 \leq S_4/S_3 \leq 30$. An electrochemical apparatus having the foregoing characteristic peaks with $S_4/S_3$ within the foregoing range exhibits better safety performance and a longer cycle life. An increase in the peak area of the infrared characteristic peaks after cycling indicates that more solvent enters a pore structure of the sub-nanoporous material, thereby improving safety performance of the electrochemical apparatus and extending the cycle life of the electrochemical apparatus. The foregoing cycling includes the following steps: the electrochemical apparatus is charged at a constant current of 0.2C to 3.7 V in an environment of 25±1°C, then charged at a constant voltage of 3.7 V to 0.025C, left standing for 5 minutes, and discharged at a constant current of 0.2C to 2.8 V.

The electrochemical apparatus of this application further includes a positive electrode plate. This application does not particularly limit the positive electrode plate provided that the objectives of this application can be achieved. For example, the positive electrode plate includes a positive electrode current collector and a positive electrode active material layer disposed on at least one surface of the positive electrode current collector. This application does not particularly limit the positive electrode current collector provided that the objectives of this application can be achieved. For example, the positive electrode current collector may include aluminum foil, aluminum alloy foil, a composite current collector (for example, aluminum-carbon composite current collector), or the like. This application does not particularly limit the thickness of the positive electrode current collector provided that the objectives of this application can be achieved. For example, the thickness of the positive electrode current collector ranges from 5 $\mu$m to 20 $\mu$m. In this application, the positive electrode active material layer includes a positive electrode active material. This application does not particularly limit the type of the positive electrode active material provided that the objectives of this application can be achieved. For example, the positive electrode active material may include at least one of lithium nickel cobalt manganese oxide (NCM), lithium nickel cobalt aluminum oxide, lithium iron phosphate ($LiFePO_4$), lithium-rich manganese-based material, lithium cobalt oxide, lithium manganese oxide, or lithium manganese iron phosphate. This application does not particularly limit the type of NCM provided that the objectives of this application can be achieved. For example, the NCM may include at least one of NCM811, NCM622, NCM523, or NCM111. In this application, the positive electrode active material may further include a non-metal element, for example, the non-metal element includes at least one of fluorine, phosphorus, boron, or chlorine. This application does not particularly limit the thickness of the positive electrode active material layer provided that the objectives of this application can be achieved. For example, the thickness of the one-sided positive electrode active material layer ranges from 30 $\mu$m to 120 $\mu$m. In this application, the positive electrode active material layer may be disposed on one surface of the positive electrode current collector in a thickness direction of the positive electrode current collector, or may be disposed on two surfaces of the positive electrode current collector in a thickness direction of the positive electrode current collector. It should be noted that the "surface" herein may be an entire region of the surface of the positive electrode current collector or may be a partial region of the surface of the positive electrode current collector. This application does not particularly limit thereto provided that the objectives of this application can be achieved. The positive electrode active material layer of this application may further include a positive electrode conductive agent and a positive electrode binder. This application does not particularly limit the positive electrode conductive agent and the positive electrode binder provided that the objectives of this application can be achieved. For example, the positive electrode conductive agent may include but is not limited to at least one of conductive carbon black (Super P), carbon nanotubes (CNTs), carbon nanofibers, graphene, a metal material, or a conductive polymer. The carbon nanotubes may include but are not limited to single-walled carbon nanotubes and/or multi-walled carbon nanotubes. The carbon fibers may include but are not limited to vapor grown carbon fibers (VGCF) and/or carbon nanofibers. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. The positive electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polypropylene acid, styrene-butadiene rubber, acrylic styrene-butadiene rubber, epoxy resin, or nylon.

The electrochemical apparatus of this application further includes a negative electrode plate. The negative electrode plate is not particularly limited in this application provided that the objectives of this application can be achieved. For example, the negative electrode plate may include a lithium-copper composite strip. This application does not particularly limit the thickness of the lithium-copper composite strip provided that the objectives of this application can be achieved. For example, the thickness of the lithium-copper composite strip may range from 30 $\mu$m to 80 $\mu$m. The negative electrode plate may further include a negative electrode current collector and a negative electrode active material layer disposed on at least one surface of the negative electrode current collector. This application does not particularly limit the negative electrode current collector provided that the objectives of this application can be achieved. For example, the negative electrode current collector may include copper foil, copper alloy foil, nickel foil, stainless steel foil, titanium foil, foamed nickel, foamed copper, a composite current collector (for example, carbon-copper composite current collector, nickel-copper composite current collector, or titanium-copper composite current collector), or the like. This application does not particularly limit the thickness of the negative electrode current collector provided that the objectives of this application can be achieved. For example, the thickness of the negative electrode current collector ranges from 4 $\mu$m to 20 $\mu$m. In this application, the negative electrode active material layer includes a negative electrode active material. This application imposes no particular limitation on the negative electrode active material provided that the objectives of this application can be achieved. For example, the negative electrode active material may include, but is not limited to, one or more of graphite, a mesocarbon microbead (MCMB), hard carbon, soft carbon, a Li-Sn alloy, a Li-Sn-O alloy, Sn, SnO, $SnO_2$, spinel-structure lithium titanate $Li_4Ti_5O_{12}$, a Li-Al alloy, or lithium metal. This application does not particularly limit the thickness of the negative electrode active material layer provided that the objectives of this application can be achieved. For example, the thickness of the one-sided negative electrode material layer ranges from 30 $\mu$m to 130 $\mu$m. In this application, the negative electrode active material layer may be disposed on one surface of the negative electrode current collector in a thickness direction of the negative electrode current collector, or may be disposed on two surfaces of the negative electrode current collector in a thickness direction of the negative electrode current collector. It should be noted that the "surface" herein may be the entire zone of the negative electrode current collector or a partial zone of the negative electrode current collector. This is not particularly limited in this application provided that the objectives of this application can be achieved. The negative electrode active material layer of this application may further include a negative electrode conductive agent and a negative electrode binder. This application does not particularly limit the negative electrode conductive agent and the negative electrode binder provided that the objectives of this application can be achieved. For example, the negative electrode conductive agent may be the same as the positive electrode conductive agent mentioned above, and the negative electrode binder may be the same as the positive electrode binder mentioned above.

The electrochemical apparatus of this application further includes an electrolyte, where the electrolyte includes a lithium salt and a non-aqueous solvent. The lithium salt may include at least one of $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), lithium bis(trifluoromethanesulfonyl)imide (LiTFSI), or lithium difluoroborate. This application does not particularly limit the non-aqueous solvent provided that the objectives of this application can be achieved. For example, the non-aqueous solvent may include, but is not limited to, at least one of a carbonate compound, a carboxylate compound, an ether compound, or another organic solvent. The carbonate compound may include, but is not limited to, at least one of a linear carbonate compound, a cyclic carbonate compound, or a fluorocarbonate compound. The linear carbonate compound may include, but is not limited to, at least one of dimethyl carbonate, diethyl carbonate, dipropyl carbonate, methyl propyl carbonate, ethylene propyl carbonate, or methyl ethyl carbonate. The cyclic carbonate compound may include, but is not limited to, at least one of ethylene carbonate, propylene carbonate (PC), butylene carbonate, or vinylene ethylene carbonate. The fluorocarbonate compound may include, but is not limited to, at least one of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, caprolactone, valerolactone, or hexalactone. The ether compound may include, but is not limited to, at least one of dibutyl ether, tetraglyme, diglyme, 1,2-dimethoxyethane, 1,2-diethoxyethane, ethoxymethoxy ethane, 2-methyltetrahydrofuran, or tetrahydrofuran. The another organic solvent may include, but is not limited to, at least one of dimethyl sulfoxide, 1,2-dioxolane, sulfolane, methyl-sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The electrochemical apparatus of this application further includes a packaging bag configured to accommodate the positive electrode plate, the separator, the negative electrode plate, and the electrolyte, as well as other components known in the field of electrochemical apparatuses. This application does not limit these other components. The packaging bag is not particularly limited in this application and may be any well-known packaging bag in the art, provided that the objectives of this application can be achieved.

The electrochemical apparatus in this application is not particularly limited, and may include any apparatus in which an electrochemical reaction occurs. In an embodiment of this application, the electrochemical apparatus may include, but is not limited to, a lithium-ion secondary battery (lithium-ion battery), a lithium metal secondary battery (lithium metal battery), a sodium-ion secondary battery, a sodium metal secondary battery, a lithium polymer secondary battery, or a lithium-ion polymer secondary battery. This application does not particularly limit the shape of the electrochemical apparatus provided that the objectives of this application can be achieved. For example, the electrochemical apparatus may include, but is not limited to, a cylindrical battery, a prismatic battery, or an irregularly shaped battery.

A preparation process of the electrochemical apparatus is well known to persons skilled in the art, and is not particularly limited in this application. For example, the preparation process may include, but is not limited to, the following steps: stacking a positive electrode plate, a separator, and a negative electrode plate in sequence, then fixing four corners of an entire stacked structure with adhesive tape to obtain an electrode assembly with a stacked structure, placing the electrode assembly into a packaging pouch, injecting an electrolyte into the packaging pouch, and sealing the pouch to obtain an electrochemical apparatus; alternatively, stacking a positive electrode plate, a separator, and a negative electrode plate in sequence, winding or folding the stack as needed to obtain an electrode assembly with a wound structure, placing the electrode assembly into a packaging pouch, injecting an electrolyte into the packaging pouch, and sealing the pouch to obtain an electrochemical apparatus. In addition, an overcurrent prevention element, a guide plate, and the like may also be placed into the packaging bag as needed, so as to prevent pressure increase, overcharge, and overdischarge inside the electrochemical apparatus.

A third aspect of this application provides an electronic apparatus including the electrochemical apparatus according to the second aspect of this application. The electrochemical apparatus provided in this application has good safety performance and a long cycle life, thereby enabling the electronic apparatus of this application to have a long service life.

The electronic apparatus of this application is not particularly limited, and may be any electronic apparatus known in the prior art. In some embodiments, the electronic apparatus may include, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, or a lithium-ion capacitor.

Examples

The following describes some embodiments of this application more specifically using examples and comparative examples. Various tests and evaluations are performed using the following methods. In addition, unless otherwise specified, "part" and "%" are based on weight.

Test method and device

Raman spectroscopy test

Separators prepared in a same example were divided into two groups: one group served as separator test samples before cycling, and the other group was assembled into lithium metal batteries. The lithium metal battery was cycled for 10 cycles according to the following steps: The lithium metal battery was charged at a constant current of 0.2C to 3.7 V in an environment of $25 \pm 1°C$, then charged at a constant voltage of 3.7 V to 0.025C, left standing for 5 minutes, and discharged at a constant current of 0.2C to 2.8 V; then the lithium metal battery was disassembled to remove the separator as a separator test sample after cycling. Raman spectra of the separator before cycling and the separator after cycling were tested using a Raman spectrometer, and the Raman spectra were analyzed to calculate peak areas $S_1$ and $S_2$ of a Raman peak and a value of $S_2/S_1$.

Infrared spectroscopy test

Separator samples before cycling and separator samples after cycling were obtained in the same manner as in the Raman test described above. Infrared spectra of the separator before cycling and the separator after cycling were tested using an infrared spectrometer, and the infrared spectra were analyzed to calculate peak areas $S_3$ and $S_4$ of infrared characteristic peaks and a value of $S_4/S_3$.

Scanning electron microscope (SEM) test

Morphology of a surface of a separator in a thickness direction and morphology of a cross-section along the thickness direction were observed using a scanning electron microscope, and SEM photographs were taken.

Test for pore size and porosity of separator

A pore size and porosity of a separator were tested according to the national standard GB/T 21650.1-2008 "Pore Size Distribution and Porosity of Solid Materials by Mercury Intrusion and Gas Adsorption".

Flexibility test

A separator was folded with a folding angle $\leq 360°$, and folding was terminated when cracks appeared after folding. A higher number of folding times indicates better flexibility.

Thermal shrinkage test

A prepared separator was cut into samples of a size of 5 cm × 5 cm. The sample was laid flat on a glass plate, and the glass plate with the sample was placed in an oven at 200°C, and left standing for 2 hours. A degree of edge curling of the separator was observed, and corresponding length and width dimensions A cm × B cm were measured. Shrinkage rate $A_1\%$ in a length direction and shrinkage rate $B_1\%$ in a width direction were calculated respectively, where $A_1\% = (5 - A)/5 \times$

$100\%$; $B_1\% = (5 - B) / 5 \times 100\%$. A criterion for determining whether the separator exhibits thermal shrinkage at 200°C is as follows: if $A_1\% \leq 10\%$ and $B_1\% \leq 10\%$, a determination result of whether the separator exhibits thermal shrinkage at 200°C is "no"; and if $A_1\% \geq 10\%$ or $B_1\% \geq 10\%$, the determination result of whether the separator exhibits thermal shrinkage at 200°C is "yes".

Cycle capacity retention rate test

A lithium metal battery was placed in a constant temperature chamber at 25°C ± 2°C and left standing for 2 hours. Cycling process 1 was as follows: The lithium metal battery was charged at a constant current of 0.2C to 3.7 V, then charged at a constant voltage of 3.7 V to 0.05C and left standing for 5 minutes; and then discharged at a constant current of 0.2C to 3.0 V. This constituted one charge-discharge cycle, and a discharge capacity of the lithium metal battery after a first cycle was recorded. Then, the charge-discharge cycling process was repeated according to the foregoing cycling process 1. At the 50th, 100th, 150th, and 200th cycles, one charge-discharge cycle was performed according to cycling process 2, where cycling process 2 was as follows: The lithium metal battery was charged at a constant current of 0.05C to 3.7 V, then charged at a constant voltage of 3.7 V to 0.05C and left standing for 5 minutes; and then discharged at a constant current of 0.05C to 3.0 V. This constituted one charge-discharge cycle. A discharge capacity after each cycle was recorded. Ten lithium metal batteries were taken for each group, and an average value of capacity retention rates of the ten lithium metal batteries was calculated.

Cycle capacity retention rate of a lithium metal battery = discharge capacity after each cycle (mAh)/discharge capacity after the first cycle (mAh) × 100%.

Test for number of cycles

A lithium metal battery was placed in a constant temperature chamber at 25°C ± 2°C and left standing for 2 hours. A cycling process was as follows: The lithium metal battery was charged at a constant current of 0.1C to 3.7 V, then charged at a constant voltage of 3.7 V to 0.05C and left standing for 5 minutes, and then discharged at a constant current of 0.1C to 3.0 V. This constituted one charge-discharge cycle, and a discharge capacity of the lithium metal battery after a first cycle was recorded. Then, the charge-discharge cycling process was repeated according to the foregoing cycling process, and the number of cycles at which a capacity retention rate of the lithium metal battery dropped to 80% was recorded. Ten lithium metal batteries were taken for each group, and an average value of the number of cycles at which the capacity retention rate of the lithium metal batteries dropped to 80% was calculated.

Coulombic efficiency test

In an environment at 20°C, an electrochemical workstation (Landian Electrochemical Workstation from Shenzhen Kejing Electronic Co., LTD) was used, and the lithium metal battery was charged at a constant current of 0.2C to 3.7 V, then charged at a constant voltage to 0.025C, left standing for 5 minutes, then discharged at a constant current of 0.2C to 2.8 V, and left standing for 5 minutes. This constituted one cycle. Then, the charge-discharge cycling process was repeated according to the foregoing process. Coulombic efficiency is an average value of ratios of discharge capacity to charge capacity for various cycles when a capacity of the lithium metal battery decays to 80% of a discharge capacity of a first cycle.

Example 1

<Preparation of negative electrode plate>

A lithium-copper composite strip (provided by Tianjin Zhongneng Lithium Industry Co., Ltd.) was used as a negative electrode plate, with a thickness of 50 μm, and directly punched into a specification with a diameter of 18 mm for use.

<Preparation of electrolyte>

In a dry argon atmosphere glovebox, lithium salt lithium bis(trifluoromethanesulfonyl)imide (LiTFSI) was added to and dissolved in an organic solvent propylene carbonate (PC), and the solution was mixed evenly to obtain an electrolyte with a lithium salt concentration of 1 mol/L.

<Preparation of positive electrode plate>

A positive electrode active material LiFePO$_4$, a conductive agent conductive carbon black, and a binder PVDF were mixed at a mass ratio of 97.5:1:1.5, N-methylpyrrolidone (NMP) was added as a solvent, and the mixture was stirred evenly to prepare a positive electrode slurry with a solid content of 75wt%. The positive electrode slurry was evenly applied onto one surface of a positive electrode current collector aluminum foil with a thickness of 13 $\mu$m, and the aluminum foil with the positive electrode slurry was dried at 90°C to obtain a positive electrode plate with a single-sided positive electrode active material layer with a thickness of 50 $\mu$m. After coating, the electrode plate was cut into samples of a specification with a diameter of 14 mm, the sample was soaked in the electrolyte prepared in the foregoing <Preparation of electrolyte> for 2 hours, and surface liquid was wiped off with dust-free paper for use.

<Preparation of separator>

2 g of CuBTC powder was dried in a vacuum oven at 100°C for 12 hours, the dried powder was ground, then the CuBTC powder and a binder PVDF were mixed at a mass ratio of 9:1, NMP was added as a solvent, and the mixture was stirred evenly to prepare a slurry with a solid content of 50wt%. The slurry was applied by blade coating using a 30 $\mu$m blade to form a film, the coated film was dried in a vacuum oven at 180°C for 72 hours for activation, and the activated film was subjected to high-pressure rolling at 1 ton (t) for use; the prepared film was soaked in the electrolyte prepared in the foregoing <Preparation of electrolyte> at 60°C for 48 hours, surface liquid was wiped off with dust-free paper, and the film was dried in a vacuum oven at 60°C for 3 minutes to obtain a separator. The separator was cut into samples of a specification with a diameter of 22 mm for use.

<Preparation of button battery>

In a dry argon atmosphere glovebox, a negative electrode shell, a negative electrode plate, a separator, a positive electrode plate, and a positive electrode shell were arranged in sequence from bottom to top, and the resulting product was encapsulated using an encapsulating machine to obtain a button battery, namely a lithium metal battery. No additional electrolyte was added during the assembly of the button battery.

Examples 2 and 3

Except for adjusting a type of a sub-nanoporous material according to Table 1, the rest was the same as those in Example 1.

Examples 4 to 6

Except for adjusting preparation parameters according to Table 1, the rest was the same as those in Example 1.

Example 7

Except for using a separator prepared according to the following <Preparation of separator>, the rest was the same as those in Example 1.

<Preparation of separator>

24 mg of PSS was dissolved in 600 mL of an ethanol-water solution (volume ratio of ethanol to water 1:1), then 2 g of CuBTC powder was added, and the solution was stirred at room temperature for 24 hours, filtered, dried in a vacuum oven at 100°C for 12 hours, and ground to obtain CuBTC powder with pores internally modified with PSS, denoted as CuBTC@PSS powder.

The CuBTC@PSS powder and the binder PVDF were mixed at a mass ratio of 9:1, NMP was added as a solvent, and the mixture was stirred evenly to prepare a slurry with a solid content of 50wt%. The slurry was applied by blade coating using a 30 $\mu$m blade to form a film, the coated film was dried in a vacuum oven at 180°C for 72 hours for activation, and the activated film was subjected to high-pressure rolling at 1 ton (t) for use; the prepared film was soaked in the electrolyte prepared in the foregoing <Preparation of electrolyte> at 60°C for 48 hours, surface liquid was wiped off with dust-free paper, and the film was dried in a vacuum oven at 60°C for 3 minutes to obtain a separator. The separator was cut into samples of a specification with a diameter of 22 mm for use.

Examples 8 to 18

Except for adjusting preparation parameters according to Table 1, the rest was the same as those in Example 7.

Example 19

Except for using a separator prepared according to the following <Preparation of separator>, the rest was the same as those in Example 1.

<Preparation of separator>

24 mg of PSS was dissolved in 600 mL of an ethanol-water solution (volume ratio of ethanol to water was 1:1), then 2 g of CuBTC powder was added, and the solution was stirred at room temperature for 24 hours, filtered, dried in a vacuum oven at 100°C for 12 hours, and ground to obtain CuBTC powder with pores internally modified with PSS, denoted as CuBTC@PSS powder.
The CuBTC@PSS powder and binder PTFE were mixed at a mass ratio of 9:1, mixed evenly by grinding, and then formed into a film by high-pressure rolling at 1 t, the rolled film was dried in a vacuum oven at 180°C for 72 hours for activation for use, the prepared film was soaked in the electrolyte prepared in the foregoing <Preparation of electrolyte> at 60°C for 48 hours, surface liquid was wiped off with dust-free paper, and the film was dried in a vacuum oven at 60°C for 3 minutes to obtain a separator. The separator was cut into samples of a specification with a diameter of 22 mm for use.

Example 20

Except for adjusting preparation parameters according to Table 1, the rest was the same as those in Example 2.

Example 21

Except for adjusting preparation parameters according to Table 1, the rest was the same as those in Example 7.

Comparative Example 1

Except for using a separator prepared according to the following <Preparation of separator>, the rest was the same as those in Example 1.

<Preparation of separator>

A PP film (provided by Entek Company) was soaked in the electrolyte prepared in the foregoing <Preparation of electrolyte> at 60°C for 48 hours, surface liquid was wiped off with dust-free paper, and the film was dried in a vacuum oven at 60°C for 3 minutes to obtain a separator. The separator was cut into samples of a specification with a diameter of 22 mm for use.

Comparative Example 2

Except for replacing the PP film with a PE film (provided by Entek Company), the rest was the same as those in Comparative Example 1.

Comparative Example 3

Except for replacing the PP film prepared in <Preparation of separator> with a PE film (provided by Entek Company) and adding 70 $\mu$L of the electrolyte prepared in the foregoing <Preparation of electrolyte> during <Preparation of button battery>, the rest was the same as those in Comparative Example 1.
Relevant parameters and performance test results of examples and comparative examples are shown in Table 1 and Table 2.

**Table 1**

| | Blade specification | Roller weight (t) | Sub-nanoporous material | Polymer | Molecular weight of polymer | Binder | Preparation method |
|---|---|---|---|---|---|---|---|
| Example 1 | 30 μm | 1 | CuBTC | / | / | PVDF | Wet method |
| Example 2 | 30 μm | 1 | ZIF-8 | / | / | PVDF | Wet method |
| Example 3 | 30 μm | 1 | Molecular sieve SAPO-34 | / | / | PVDF | Wet method |
| Example 4 | 30 μm | 10 | CuBTC | / | / | PVDF | Wet method |
| Example 5 | 30 μm | 0.8 | CuBTC | / | / | PVDF | Wet method |
| Example 6 | 30 μm | 0.1 | CuBTC | / | / | PVDF | Wet method |
| Example 7 | 30 μm | 1 | CuBTC | PSS | 150000 | PVDF | Wet method |
| Example 8 | 20 μm | 1 | CuBTC | PSS | 150000 | PVDF | Wet method |
| Example 9 | 40 μm | 1 | CuBTC | PSS | 150000 | PVDF | Wet method |
| Example 10 | 80 μm | 1 | CuBTC | PSS | 150000 | PVDF | Wet method |
| Example 11 | 150 μm | 1 | CuBTC | PSS | 150000 | PVDF | Wet method |
| Example 12 | 30 μm | 5 | CuBTC | PSS | 150000 | PVDF | Wet method |
| Example 13 | 30 μm | 0.5 | CuBTC | PSS | 150000 | PVDF | Wet method |
| Example 14 | 30 μm | / | CuBTC | PSS | 150000 | PVDF | Wet method |
| Example 15 | 30 μm | 1 | ZIF-8 | PSS | 150000 | PVDF | Wet method |
| Example 16 | 30 μm | 1 | ZIF-67 | PSS | 150000 | PVDF | Wet method |
| Example 17 | 30 μm | 1 | CuBTC | PAA | 150000 | PVDF | Wet method |
| Example 18 | 30 μm | 1 | CuBTC | PSS | 150000 | PTFE | Wet method |
| Example 19 | / | 1 | CuBTC | PSS | 150000 | PTFE | Dry method |
| Example 20 | 30 μm | 1 | 13X molecular sieve | / | 150000 | PVDF | Wet method |
| Example 21 | 150 μm | 1 | CuBTC | / | 150000 | PVDF | Wet method |

Note: "/" in Table 1 indicates no relevant preparation parameter.

## Table 2

| | Pore size of sub-nanoporous material (nm) | Specific surface area of sub-nanoporous material (m²/g) | Particle size of sub-nanoporous material (nm) | Pore size of separator (nm) | Thickness of separator (μm) | Porosity of separator (%) | $S_2/S_1$ | $S_4/S_3$ | Coulombic efficiency (%) | Number of cycles | Thermal shrinkage of separator at 200°C |
|---|---|---|---|---|---|---|---|---|---|---|---|
| Example 1 | 0.8 | 1172 | 600 | 60 | 20 | 20 | 3.2 | 21 | 99.46 | 265 | No |
| Example 2 | 0.34 | 1300 | 200 | 60 | 20 | 22 | 2.5 | 18 | 99.43 | 262 | No |
| Example 3 | 0.43 | 430 | 1000 | 50 | 20 | 21 | 2.4 | 16 | 99.41 | 258 | No |
| Example 4 | 0.8 | 1172 | 600 | 20 | 20 | 15 | 3.1 | 20 | 99.34 | 236 | No |
| Example 5 | 0.8 | 1172 | 600 | 100 | 20 | 28 | 3.3 | 24 | 99.38 | 251 | No |
| Example 6 | 0.8 | 1172 | 600 | 500 | 20 | 35 | 3.4 | 25 | 99.32 | 214 | No |
| Example 7 | 0.8 | 1172 | 600 | 60 | 20 | 19 | 3 | 20 | 99.65 | 298 | No |
| Example 8 | 0.8 | 1172 | 600 | 60 | 10 | 18 | 3.4 | 25 | 99.48 | 284 | No |
| Example 9 | 0.8 | 1172 | 600 | 60 | 30 | 21 | 3.2 | 22 | 99.66 | 296 | No |
| Example 10 | 0.8 | 1172 | 600 | 60 | 50 | 20 | 3.4 | 26 | 99.60 | 301 | No |
| Example 11 | 0.8 | 1172 | 600 | 60 | 100 | 24 | 3.6 | 28 | 99.47 | 275 | No |
| Example 12 | 0.8 | 1172 | 600 | 60 | 20 | 10 | 3.1 | 24 | 99.53 | 276 | No |
| Example 13 | 0.8 | 1172 | 600 | 65 | 20 | 30 | 3.3 | 25 | 99.38 | 255 | No |
| Example 14 | 0.8 | 1172 | 600 | 68 | 20 | 60 | 3.3 | 27 | 99.28 | 234 | No |
| Example 15 | 0.34 | 1300 | 100 | 50 | 20 | 22 | 2.5 | 18 | 99.63 | 296 | No |
| Example 16 | 0.34 | 1280 | 1000 | 50 | 20 | 21 | 2.4 | 17 | 99.62 | 289 | No |
| Example 17 | 0.8 | 1172 | 600 | 60 | 20 | 19 | 3.8 | 29 | 99.47 | 278 | No |
| Example 18 | 0.8 | 1172 | 600 | 60 | 20 | 23 | 3.3 | 25 | 99.61 | 293 | No |
| Example 19 | 0.8 | 1172 | 600 | 80 | 45 | 23 | 3.6 | 29 | 99.58 | 289 | No |
| Example 20 | 1 | 950 | 500 | 60 | 20 | 20 | 2.8 | 14 | 99.43 | 245 | No |
| Example 21 | 0.8 | 1172 | 5000 | 58 | 100 | 24 | 2.1 | 10 | 99.32 | 219 | No |
| Comparative Example 1 | / | / | / | 42 | 10 | 42 | / | / | 99.10 | 53 | Yes |
| Comparative Example 2 | / | / | / | 42 | 10 | 42 | / | / | 98.95 | 43 | Yes |
| Comparative Example 3 | / | / | / | 42 | 10 | 42 | / | / | 95.95 | 87 | Yes |

Note: "/" in Table 2 indicates no relevant parameter.

Overall, as compared with Comparative Examples 1 to 3, lithium metal batteries of Examples 1 to 21 of this application exhibit higher coulombic efficiency and a larger number of cycles, meaning that the lithium metal batteries of this application have higher coulombic efficiency and longer cycle life.

It can be learned from Examples 1 to 3 and Example 20 that, adjusting a pore size of a sub-nanoporous material within the range of this application can improve coulombic efficiency of the lithium metal battery and increase the number of cycles, meaning that the lithium metal battery has high coulombic efficiency and long cycle life.

A type of a sub-nanoporous material typically affects coulombic efficiency and cycle life of a lithium metal battery. It can be learned from Examples 1 to 3 and Example 20 that, selecting a sub-nanoporous material within the range of this application enables the lithium metal battery to have high coulombic efficiency and a large number of cycles, meaning that the lithium metal battery has high coulombic efficiency and long cycle life.

A specific surface area of a sub-nanoporous material typically affects coulombic efficiency and cycle life of a lithium metal battery. It can be learned from Examples 1 to 3 that, adjusting the specific surface area of a nanoporous material within the range of this application enables the lithium metal battery to have high coulombic efficiency and a large number of cycles, meaning that the lithium metal battery has high coulombic efficiency and long cycle life.

A particle size of a sub-nanoporous material typically affects coulombic efficiency and cycle life of a lithium metal battery. It can be learned from Examples 1 to 3, Examples 15 and 16, Example 20, and Example 21 that, adjusting the particle size of a nanoporous material within the range of this application enables the lithium metal battery to have high coulombic efficiency and a large number of cycles, meaning that the lithium metal battery has high coulombic efficiency and long cycle life.

A pore size of a separator typically affects coulombic efficiency and cycle life of a lithium metal battery. It can be learned from Example 1, Examples 3 to 6, and Example 19 that, adjusting the pore size of a separator within the range of this application can improve coulombic efficiency of a lithium metal battery and increase the number of cycles, meaning that the lithium metal battery has high coulombic efficiency and long cycle life.

A thickness of a separator typically affects coulombic efficiency and cycle life of a lithium metal battery. It can be learned from Examples 7 to 11 and Example 19 that, adjusting the thickness of a separator within the range of this application enables the lithium metal battery to have high coulombic efficiency and a large number of cycles, meaning that the lithium metal battery has high coulombic efficiency and long cycle life.

A porosity of a separator typically affects coulombic efficiency and cycle life of a lithium metal battery. It can be learned from Examples 1 to 21 that, adjusting the porosity of a separator within the range of this application enables the lithium metal battery to have relatively high coulombic efficiency and a relatively large number of cycles, meaning that the lithium metal battery has high coulombic efficiency and long cycle life.

Presence of a polymer in pores of a sub-nanoporous material typically affects coulombic efficiency and cycle life of a lithium metal battery. It can be learned from a comparison of Example 1 and Example 7 that, modifying pores of a sub-nanoporous material of a separator with a polymer enables the lithium metal battery to have higher coulombic efficiency and a larger number of cycles, meaning that the lithium metal battery has higher coulombic efficiency and longer cycle life.

A type of a polymer typically affects coulombic efficiency and cycle life of a lithium metal battery. It can be learned from Example 7 and Example 17 that, selecting a polymer within the range of this application enables the lithium metal battery to have high coulombic efficiency and a large number of cycles, meaning that the lithium metal battery has high coulombic efficiency and long cycle life.

A type of a binder typically affects coulombic efficiency and cycle life of a lithium metal battery. It can be learned from Example 7 and Example 18 that, selecting a binder within the range of this application enables the lithium metal battery to have high coulombic efficiency and a large number of cycles, meaning that the lithium metal battery has high coulombic efficiency and long cycle life.

A value of $S_2/S_1$ typically affects coulombic efficiency and cycle life of a lithium metal battery. It can be learned from Examples 1 to 21 that, adjusting the value of $S_2/S_1$ within the range of this application enables the lithium metal battery to have high coulombic efficiency and a large number of cycles, meaning that the lithium metal battery has high coulombic efficiency and long cycle life.

A value of $S_4/S_3$ typically affects coulombic efficiency and cycle life of a lithium metal battery. It can be learned from Examples 1 to 21 that, adjusting the value of $S_4/S_3$ within the range of this application enables the lithium metal battery to have high coulombic efficiency and a large number of cycles, meaning that the lithium metal battery has high coulombic efficiency and long cycle life.

Separators prepared in Examples 1 to 21 exhibit no thermal shrinkage when heated to 200°C, and demonstrate good heat resistance, whereas separators prepared in Comparative Examples 1 to 3 exhibit thermal shrinkage when heated to 200°C, and demonstrate poor heat resistance. This indicates that the separator provided in this application can mitigate short-circuit problems caused by thermal shrinkage of the separator at high temperatures, thereby improving safety performance of an electrochemical apparatus.

The inventors evaluated flexibility of the separators. Separators prepared in Examples 1 to 21 of this application were folded for more than 100 times without cracks appearing, meaning that the separator provided in this application has good flexibility.

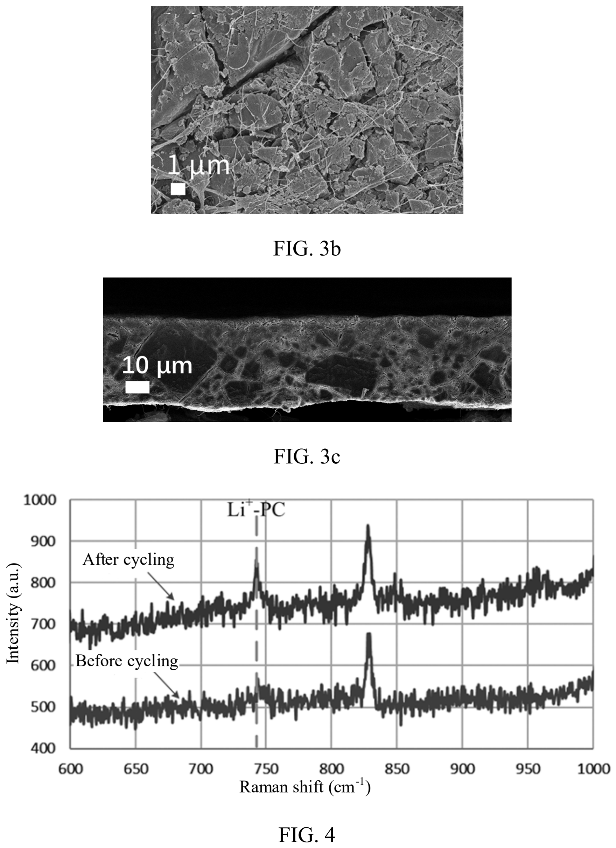

FIG. 3a to FIG. 3c are SEM photographs of a separator prepared in Example 19, where FIG. 3a and FIG. 3b are SEM photographs of a surface of the separator prepared in Example 19 at different magnifications. It can be learned from FIG. 3a that, a surface of the separator prepared in Example 19 perpendicular to a thickness direction is flat and dense; in FIG. 3b, curled linear structures are a binder, and the binder is uniformly distributed on a sub-nanoporous material. FIG. 3c is an SEM photograph of a cross-section of the separator prepared in Example 19 along the thickness direction of the separator. It can be learned from FIG. 3c that, the separator prepared in Example 19 is also dense in the thickness direction. In summary, the separator prepared in Example 19 of this application is dense and flat.

It can be learned from FIG. 4 that, a Raman spectrum of a separator of a lithium metal battery of Example 1 exhibits a Raman peak of $Li^+$-$TFSI^-$ between 730 $cm^{-1}$ and 750 $cm^{-1}$, where a peak area of the Raman peak before cycling is $S_1$, a peak area of the Raman peak after cycling is $S_2$, and $S_2/S_1 = 3.2$.

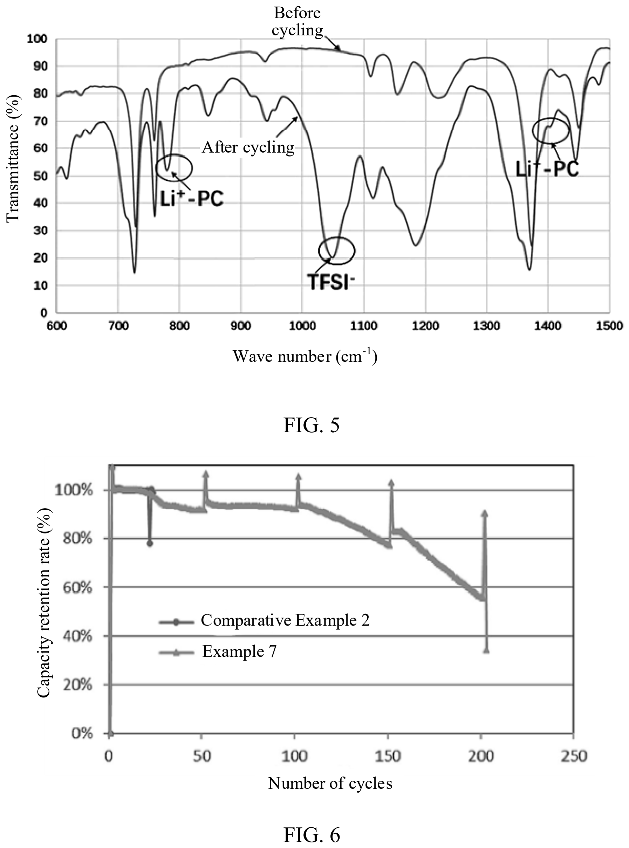

It can be learned from FIG. 5 that, an infrared spectrum of the separator of the lithium metal battery of Example 1 exhibits infrared characteristic peaks between 600 $cm^{-1}$ and 800 $cm^{-1}$, 1000 $cm^{-1}$ and 1260 $cm^{-1}$, and 1300 $cm^{-1}$ and 1500 $cm^{-1}$, where a sum of peak areas of the infrared characteristic peaks in the foregoing ranges before cycling is $S_3$, a sum of peak areas of the infrared characteristic peaks in the foregoing ranges after cycling is $S_4$, and $S_4/S_3 = 21$. An infrared spectrum before cycling shows characteristic peak positions of CuBTC in the ranges of 600 $cm^{-1}$ to 800 $cm^{-1}$, 1000 $cm^{-1}$ to 1260 $cm^{-1}$, and 1300 $cm^{-1}$ to 1500 $cm^{-1}$; an infrared spectrum after cycling, in addition to the foregoing characteristic peaks, exhibits infrared characteristic peaks of $Li^+$-PC between 770 $cm^{-1}$ and 800 $cm^{-1}$ and 1380 $cm^{-1}$ and 1420 $cm^{-1}$, and an infrared characteristic peak of $TFSI^-$ between 1000 $cm^{-1}$ and 1100 $cm^{-1}$, meaning that an electrolyte enters pores of the separator and can also enter sub-nanopores inside a sub-nanoporous material, and the separator has good electrolyte absorption performance.

It can be learned from FIG. 6 that, under the same cycling conditions, a cycle capacity retention rate of a lithium metal battery of Comparative Example 2 decays to below 80% at the 25th cycle, whereas the lithium metal battery prepared in Example 7 of this application decays to below 80% only at the 150th cycle, meaning slower capacity decay and a longer cycle life, thus demonstrating that the lithium metal battery prepared in Example 7 of this application exhibits better cycling performance and a longer cycle life.

The foregoing descriptions are merely preferred embodiments of this application, and are not intended to limit this application. Any modifications, equivalent replacements, improvements, and the like made without departing from the spirit and principle of this application shall fall within the protection scope of this application.

**Claims**

1. A separator, comprising a sub-nanoporous material and a binder, wherein the sub-nanoporous material comprises a metal-organic framework material or a molecular sieve material; and a pore size of pores of the sub-nanoporous material ranges from 0.01 nm to 1 nm.

2. The separator according to claim 1, wherein a pore size of pores of the separator ranges from 20 nm to 500 nm.

3. The separator according to claim 1, wherein the metal-organic framework material comprises at least one of MOF-69C, MOF-74, MOF-5, ZIF-67, ZIF-8, MIL-100(Cr), MIL-100(Fe), UIO-66, PCN-61, or CuBTC; and

   the molecular sieve material comprises at least one of MCM-41, SAPO-34, 3A molecular sieve, 4A molecular sieve, 5A molecular sieve, or 13X molecular sieve.

4. The separator according to claim 1, meeting at least one of the following characteristics:

   (1) the pores of the sub-nanoporous material containing a polymer, wherein the polymer comprises at least one of sodium polystyrene sulfonate, poly N-2-(dimethylaminopropyl) methacrylamide, or polyacrylic acid;
   (2) a particle size D50 of the sub-nanoporous material ranging from 50 nm to 5000 nm;
   (3) a specific surface area of the sub-nanoporous material ranging from 200 $m^2/g$ to 2000 $m^2/g$; or
   (4) the binder comprising at least one of polyvinylidene fluoride, polytetrafluoroethylene, polyacrylate, polyimide, polyamide, polyamide-imide, polyvinyl alcohol, polyacrylonitrile, polystyrene-butadiene copolymer, sodium alginate, sodium carboxymethyl cellulose, potassium carboxymethyl cellulose, sodium hydroxymethyl cellulose, or potassium hydroxymethyl cellulose.

5. The separator according to claim 1, meeting at least one of the following characteristics:

   (1) a thickness of the separator ranging from 5 $\mu$m to 200 $\mu$m; or
   (2) a porosity of the separator ranging from 10% to 80%.

6. The separator according to any one of claims 1 to 5, meeting at least one of the following characteristics:

(1) the particle size D50 of the sub-nanoporous material ranging from 100 nm to 1000 nm;
(2) the thickness of the separator ranging from 10 $\mu$m to 50 $\mu$m;
(3) the porosity of the separator ranging from 10% to 30%;
(4) the pore size of pores of the separator ranging from 20 nm to 100 nm; or
(5) the specific surface area of the sub-nanoporous material ranging from 200 $m^2$/g to 1500 $m^2$/g.

7. An electrochemical apparatus comprising the separator according to any one of claims 1 to 6.

8. The electrochemical apparatus according to claim 7, wherein the electrochemical apparatus is cycled for a number greater than or equal to 10 cycles, wherein the cycling comprises: the electrochemical apparatus is charged at a constant current of 0.2C to 3.7 V in an environment of 25+1°C, then charged at a constant voltage of 3.7 V to 0.025C, left standing for 5 minutes, and discharged at a constant current of 0.2C to 2.8 V; wherein a Raman spectrum of the separator exhibits a Raman peak between 730 $cm^{-1}$ and 750 $cm^{-1}$, a peak area of the Raman peak before cycling is $S_1$, a peak area of the Raman peak after cycling is $S_2$, and $1.1 \leq S_2/S_1 \leq 5$.

9. The electrochemical apparatus according to claim 8, wherein an infrared spectrum of the separator exhibits infrared characteristic peaks between 600 $cm^{-1}$ and 800 $cm^{-1}$, 1000 $cm^{-1}$ and 1260 $cm^{-1}$, and 1380 $cm^{-1}$ and 1500 $cm^{-1}$, wherein a sum of peak areas of the infrared characteristic peaks before cycling is $S_3$, a sum of peak areas of the infrared characteristic peaks after cycling is $S_4$, and $1.1 \leq S_4/S_3 \leq 100$, preferably $1.1 \leq S_4/S_3 \leq 30$.

10. An electronic apparatus, comprising the electrochemical apparatus according to any one of claims 7 to 9.

FIG. 1

FIG. 2

FIG. 3a

FIG. 3b

FIG. 3c

FIG. 4

FIG. 5

FIG. 6

## INTERNATIONAL SEARCH REPORT

| | International application No. |
|---|---|
| | **PCT/CN2023/086554** |

**A.    CLASSIFICATION OF SUBJECT MATTER**

H01M50/409(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 隔膜, 分子筛, 金属有机框架, MOF, ZIF, MIL, CUBUC, UIO, PCN, 孔, 修饰, 聚苯乙烯磺酸钠, 甲基丙烯酰胺, 聚丙烯酸, PSS, PAA, PDMAPMA, 纳米, nm, separator?, molecular 1w sieve?, metal w organic w framework?, pore, hole, modificat+, sodium, polystyrene w sulfonate, methacrylamide, polyacrylic w acid, nano

**C.    DOCUMENTS CONSIDERED TO BE RELEVANT**

| Category* | Citation of document, with indication, where appropriate, of the relevant passages | Relevant to claim No. |
|---|---|---|
| Y | CN 108807798 A (NANJING UNIVERSITY) 13 November 2018 (2018-11-13) description, paragraphs 5-19 and 39-50 | 1-10 |
| Y | CN 110099950 A (SEPION TECHNOLOGY INC. et al.) 06 August 2019 (2019-08-06) description, paragraphs 66-79, 90-100, 114 and 126-128 | 1-10 |
| Y | CN 105854647 A (ZHEJIANG UNIVERSITY) 17 August 2016 (2016-08-17) description, paragraphs 6-19 | 4 |
| Y | CN 113508493 A (FORD CHEER INTERNATIONAL LTD. et al.) 15 October 2021 (2021-10-15) description, paragraphs 86-157 | 1-10 |
| A | US 2016254567 A1 (GM GLOBAL TECHNOLOGY OPERATIONS LLC. et al.) 01 September 2016 (2016-09-01) entire document | 1-10 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 May 2023** | **24 May 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/086554**

| Patent document<br>cited in search report | | | Publication date<br>(day/month/year) | Patent family member(s) | | | Publication date<br>(day/month/year) |
|---|---|---|---|---|---|---|---|
| CN | 108807798 | A | 13 November 2018 | | None | | |
| CN | 110099950 | A | 06 August 2019 | EP | 3551688 | A1 | 16 October 2019 |
| | | | | EP | 3551688 | A4 | 29 July 2020 |
| | | | | US | 2019326578 | A1 | 24 October 2019 |
| | | | | US | 11545724 | B2 | 03 January 2023 |
| | | | | WO | 2018106957 | A1 | 14 June 2018 |
| | | | | JP | 2020502738 | A | 23 January 2020 |
| | | | | KR | 20190090000 | A | 31 July 2019 |
| CN | 105854647 | A | 17 August 2016 | | None | | |
| CN | 113508493 | A | 15 October 2021 | WO | 2020191003 | A1 | 24 September 2020 |
| | | | | US | 2020220219 | A1 | 09 July 2020 |
| US | 2016254567 | A1 | 01 September 2016 | US | 9929435 | B2 | 27 March 2018 |

Form PCT/ISA/210 (patent family annex) (July 2022)

22